(19) Europäisches Patentamt
European Patent Office
Office européen des brevets

(11) Publication number: 0 239 020 B1

(12) # EUROPEAN PATENT SPECIFICATION

(45) Date of publication of the patent specification: 30.05.90

(51) Int. Cl.⁵: **F23R 3/00**, F01D 9/02

(21) Application number: 87104099.4

(22) Date of filing: 20.03.87

(54) **Gas turbine combustion apparatus.**

(30) Priority: 20.03.86 JP 60575/86

(43) Date of publication of application: 30.09.87 Bulletin 87/40

(45) Publication of the grant of the patent: 30.05.90 Bulletin 90/22

(84) Designated Contracting States: CH DE FR GB LI

(56) References cited:
EP-A- 0 161 560
EP-A- 0 203 431
DE-A- 2 836 539
DE-A- 3 117 515
GB-A- 2 087 066
SU-A- 177 231
US-A- 3 652 181

(73) Proprietor: HITACHI, LTD., 6, Kanda Surugadai 4-chome, Chiyoda-ku Tokyo 101(JP)

(72) Inventor: Iizuka, Nobuyuki, 10-25, Higashitagacho-4-chome, Hitachi-shi(JP)
Inventor: Kumata, Kazuhiko, 4-5, Ushirono-2-chome, Katsuta-shi(JP)
Inventor: Kuroda, Michio, 10-13, Higashinarusawacho-2-chome, Hitachi-shi(JP)

(74) Representative: Patentanwälte Beetz sen. - Beetz jun. Timpe - Siegfried - Schmitt-Fumian, Steinsdorfstrasse 10, D-8000 München 22(DE)

EP 0 239 020 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

BACKGROUND OF THE INVENTION

The present invention relates to a gas turbine combustion apparatus of the kind referred to in the preamble portion of the patent claim.

Such a gas turbine combustion apparatus is known from DE-A 2 836 539.

As described in U.S. Patent No. 3 652 181 a conventional cooling structure for a gas turbine combustor tail pipe includes a cooling sleeve provided at a part of the combustor tail pipe. A jet of cooling fluid is impinged against a tail pipe surface through a plurality of holes formed in the cooling sleeve, thus cooling the tail pipe wall. Then, the fluid that has cooled the wall is joined into the primary flow gas through through-holes formed in the downstream portion of the tail pipe.

In order to enhance an efficiency of the gas turbine, it would be most available to increase the combustion temperature.

However, the flow rate of the air that is the cooling fluid is limited. Corresponding to the increase of the combustion temperature, the cooling of the combustor liner and the combustor tail pipe would be insufficient. For this reason, there has been a strong demand to provide a high efficiency cooling system for the combustor liner and the combustor tail pipe.

According to the prior art, since a part of air is consumed for cooling the combustor tail pipe, the air flow rate to be used for cooling the combustor liner is decreased, so that it would be impossible to further elevate the combustion temperature. Also, after the cooling of the tail pipe, the cooling air to be joined into the primary gas flow is introduced into the turbine under a two-stratified condition of the high temperature primary gas flow and the low temperature cooling air flow. This would adversely affect static and moving vanes of the turbine. Furthermore, since the cooling sleeve causes the increase of the cooling effect, the cooling sleeve is secured to the combustor tail pipe by welding but a thermal stress caused by the temperature difference between the combustor tail pipe and the cooling sleeve would be enlarged. This would be a factor of deterioration in reliability.

The conventional cooling sleeve type apparatus is constructed so that the air jets supplied through the holes formed in the cooling sleeve are introduced into the primary gas flow through the through-holes of the tail pipe after the impinge against the tail pipe wall. Accordingly, a pressure difference for allowing the cooling fluid to flow is needed between the insides and outsides of the cooling sleeve and the tail pipe. To generate the pressure difference, it is necessary to increase a pressure loss of the combustor portion. This requirement would lead to a reduction in operational efficiency of the gas turbine.

Furthermore, in the case where a part of the cooling fluid is consumed for cooling the combustor tail pipe to keep constant the temperature of combustion, a temperature distribution or gradient =[(maximum combustion temperature − mean combustion temperature)/(mean combustion temperature − cooling air temperature)] would be adversely affected in addition to the introduction of the cooling air into the tail pipe outlet. This degradation in temperature gradient would cause "high spots" of the metal temperature in the static and moving vanes of the turbine, which would be a factor for damage of the turbine.

In the gas turbine, the outlet air supplied from the compressor is introduced into a combustion chamber defined by the combustor liner and the tail pipe and is fed to the combustor liner while cooling the combustor liner and the tail pipe for combustion.

In the foregoing prior art, the cooling fluid that has been introduced from the plurality of holes formed in the cooling sleeve mounted at the downstream end of the tail pipe is joined into the primary gas through the through-holes formed in the wall of the tail pipe after the cooling fluid has impinged against the outer wall of the tail pipe to cool the wall. The consumption of the part of the cooling fluid for cooling the combustor tail pipe means the corresponding decrease of the amount of the cooling fluid to be supplied to cool the combustor liner. Accordingly, it would be impossible to the metal temperature of the combustor liner below an allowable temperature. Thus, it is inevitable to decrease the combustion temperature.

Moreover, in order to make the cooling fluid flow through the cooling sleeve into the tail pipe at a predetermined flow rate, it is necessary to impart a pressure difference between the outside of the cooling sleeve and the inside of the tail pipe. Correspondingly, the efficiency of the gas turbine would be reduced.

DE-A 2 836 539 discloses a gas turbine combustion apparatus comprising:

a cylindrical combustor liner having an outer wall in which cooling air holes are formed;

a tail pipe for introducing combustion gas, produced within said combustor liner, into a turbine portion;

a flow sleeve surrounding said combustor liner and said tail pipe substantially over their full length through a gap;

means for introducing cooling air into the gap between said flow sleeve, said tail pipe, said cooling air introducing means having a group of small holes formed in a first region of said flow sleeve close to said turbine portion and a fuel nozzle provided at a head of said combustor liner.

Starting from this prior art it is an object of the invention to provide a gas turbine combustion apparatus which is capable of introducing almost all of cooling fluid, that has been used for cooling a tail pipe, into a combustor liner as a combustion air, thus improving an efficiency of a turbine and suppressing a metal temperature of the combustor pipe below an allowable temperature.

This object is attained according to the present invention by providing a gas turbine combustion apparatus as claimed.

BRIEF DESCRIPTION OF THE DRAWINGS

In the accompanying drawings:

Fig. 1 is a cross-sectional view showing a combustion chamber to which a gas turbine combustion apparatus in accordance with one embodiment of the invention is applied;

Fig. 2 is a graph showing a cross-sectional area change of the gas turbine combustor tail pipe shown in Fig. 1;

Fig. 3 is a graph showing a heat transfer coefficient change within the gas turbine combustor tail pipe shown in Fig. 1;

Fig. 4 is an enlarged view of the tail pipe and associated parts of the gas turbine combustion apparatus shown in Fig. 1;

Figs. 5A and 5B show a pressure distribution in the vicinity of the tail pipe flow sleeve opening of the gas turbine combustion apparatus shown in Fig. 4;

Fig. 6 is a graph showing a relationship between the pressure loss and the thermal efficiency difference in the gas turbine combustion apparatus;

Fig. 7 is an enlarged view showing the combustion liner and associated parts of the gas turbine combustion apparatus shown in Fig. 1;

Fig. 8 is a graph showing a relationship among the cooling air flow rate, the combustor liner metal temperature and attainable combustion temperature; and

Fig. 9 shows a temperature distribution or gradient at the outlet of the gas turbine combustion apparatus.

## DESCRIPTION OF THE PREFERRED EMBODIMENTS

A combustion apparatus for a gas turbine in accordance with the present invention will now be described with reference to the accompanhing drawings.

A chamber of the combustion apparatus of the gas turbine is defined by a plurality of the combustor liners 3, flow sleeves 4 for the combustor liners 3, tail pipes 5, flow sleeves 6 for the tail pipes 5, and fuel nozzles 7 in a compartment surrounded by compressor discharge casings 1a and 1b and a turbine casing 2.

Discharge air from the compressor 8 enters between the tail pipe 5 and the tail pipe flow sleeve 6 through openings formed in the tail pipe flow sleeve 6, flowing on the upstream side while cooling the tail pipe 5. The air is guided along the flow sleeve 4 for the combustor liner 3 and is introduced into the combustor liner 3.

Fuel that has been replenished from the fuel nozzle 7 is burnt within the combustor liner 3. As a result, a high temperature gas is led to a turbine 9 through interiors of the combustor liner 3 and the tail pipe 5. The tail pipe 5 serves as a transient member between the combustor liner 3 and the turbine 9. Therefore, the tail pipe 5 is in the form of a three-dimensional shape which is continuous between a circular shape of a connected portion with the combustor liner 3 and a sector shape of a mount portion of the turbine 9. Thus, a cross-section of the tail pipe 5 is changed to be reduced from the combustor liner 3 side to the turbine 9 side as best shown in Fig. 2. As a result, the flow rate of the primary gas within the tail pipe 5 is largely changed due to the change in cross-section shown in Fig. 2 and the change in orientation of the shape of the tail pipe 5. This flow rate change will affect a heat transfer coefficient with respect to a wall surface of the tail pipe 5. A positional relationship between the heat transfer rate and the tail pipe 5 is shown in Fig. 3. Such heat transfer coefficient change will lead to change of a wall metal temperature of the tail pipe 5.

In comparison with the upstream side of the tail pipe 5, the downstream side metal temperature is high, and hence, a cooling effect must be increased therein.

Fig. 4 shows details of the tail pipe 5 within the combustion chamber shown in Fig. 1. The tail pipe 5 is composed of a ring 5a positioned at the press-fit portion of the tail pipe with the combustor liner 3, a retainer ring 5c that has a relatively large thickness for presenting a deformation of an outlet portion confronting the turbine 9, and a tail pipe body between the ring 5a and the retainer ring 5c. The cooling structure for reducing the metal temperature of the tail pipe 5 below an allowable temperature will now be described with reference to Fig. 4.

The cooling fluid from the compressor 8 will enter between the tail pipe 5 and the tail pipe flow sleeve 6 from an opening 10, a group of small holes 11 and openings 12 of the tail pipe flow sleeve 6 in order to cool the tail pipe 5. To cool the retainer ring 5c, the opening 10 of the flow sleeve 6 allows the cooling fluid to flow along side surfaces of the retainer ring 5c.

The group of small holes 11 of the flow sleeve 6 is formed in a range where the primary gas flow within the tail pipe 5 is high, and is particular in a range where the wall metal temperature of the tail pipe 5 is high. In such a range, the gap between the tail pipe 5 and the tail pipe flow sleeve 6 is reduced. Such structure is considerably available for cooling due to the combination of an impinge cooling that impinges the cooling fluid ejected through a plurality of injection holes arranged in the flow sleeve 6 and of the convection cooling that occurs when the cooling fluid from the opening 10 to the upstream side. The opening portion 12 of the flow sleeve 6 is formed for the purpose of introducing into the flow sleeve 6 the overall amount of the rest of the cooling fluid that is necessary for cooling the tail sleeve 5 from the openings 10 and the group of the holes 11. The cooling fluid that has been introduced from the opening 12 is joined into the cooling fluid that has been introduced from the openings 10 and the group of the small holes 11, and will flow upstream side between the tail pipe 5 and the flow sleeve 6. The tail pipe 5 in this range is cooled by conviction of the flow, so that the tail pipe wall metal temperature may be less than the allowable temperature.

Figs. 5A and 5B are illustrative of the pressure relationship at each part in the case where the distribution of the cooling fluid for cooling the tail pipe 5 is shown in Fig. 4.

Suppose that the pressure prior to the opening 10 of the flow sleeve 6 be represented by $P_2$, the internal pressure inside the openings 11 be represented

by $P_1$, and the pressure inside the openings 12 be represented by $P_3$. Also, suppose that the pressure that the flow rate of the cooling fluid downstream of the openings 12 be represented by V. $P_2$ is corresponding to the outlet pressure of the compressor 8. In Fig. 5B, the relationship between the differential pressure between the pressure $P_2$ and the pressure of $P_3$ and the flow rate V of the cooling fluid is represented by dotted lines $P_{23}$. Also, the cooling fluid that has been introduced from the small holes 11 will flow through the small holes 11 in response to the differential pressure between the pressures $P_2$ and $P_3$. The cooling fluid from the small holes 11 flows on the upstream side of the combistion chamber within the flow sleeve 6 and joins with the cooling fluid that has been introduced through the openings 12. The relationship between the flow rate V of the cooling fluid and the differential pressure $P_1$ and $P_3$ is represented by a solid line $P_{13}$. The pressure $P_{13}$ shows the restroration from the pressure $P_1$ to the pressure $P_3$ due to the "educator effect" of the flow rate V of the cooling fluid.

As a result, a pressure loss in this structure is shown by a in Fig. 5B and is considerably reduced in comparison with a pressure loss b in the case of the impinge cooling and the flowing of the fluid into the tail pipe 5 in accordance with the prior art.

Therefore, according to the present invention, it is possible to flow the cooling fluid in the optimum distribution without any pressure loss, so that the wall metal temperature of the tail pipe 5 is less than the allowable level.

Fig. 6 shows a relationship of a magnitude of the gas turbine thermal efficiency difference and the magnitude of the combustor pressure loss. In general, the pressure loss of 1% of the combustor pressure would correspond to 0.2% of the thermal efficiency of the gas turbine. In comparison with the conventional method, such effect is enchanced exceeding such level in accordance with the present invention.

Fig. 7 shows details of the combustor liner within the combustion chamber shown in Fig. 1.

The cooling air flowing between the tail pipe 5 and the flow sleeve 6 is guided by the combustor liner flow sleeve 4, flowing upstream while cooling an outer periphery of the combustor liner 3, and will enter the combustor liner 3 through the cooling holes, diluting air holes, and combustion air holes.

A diluting air guide plate 13 is provided in the combustor liner flow sleeve 4. The diluting air guide plate 13 serves to flow the cooling fluid from the diluting air holes smoothly. As a result, the temperature unevenness will be improved in the combustor liner 3 and thus, a reliability of the turbine may be enhanced to a large extent.

Also, in the case where all of the cooling fluid is not made to flow for cooling the tail pipe but a part of the cooling fluid is bypassed to flow directly through the combustor liner, it is possible to smoothly control the air distribution and the flow of the cooling fluid.

The metal temperature of the combustor liner 3 largely depends upon the flow rate of the cooling fluid flowing through the combustor liner 3. The decrease of the flow rate will lead to the elevation of the metal temperature of the combustor liner. This relationship is shown in Fig. 8.

According to the conventional technique, to consume the cooling fluid for cooling the tail pipe 5, the consumption of 1% will cause the metal temperature of the combustor liner to be elevated by about 20°C. As a result, the combustion temperature within the combustor liner must be reduced corresponding to the metal temperature elevation. This is not desirable from a point of view of the gas turbine temperature elevation.

Also, in the thus constructed tail pipe 5, there is provided a tail pipe support boss 5b on the downstream side and there is provided the retainer ring 5c at the outlet portion of the tail pipe 5 as shown in Fig. 4. Since these portions are different in configuration from the other parts, there would be generated "high spots" of the metal temperature. In order to avoid the high spots, it is possible to flow the cooling fluid through through-holes formed in the tail pipe 5 to such an extent that the amount of the fluid flow would not affect the advantage of the foregoing embodiment.

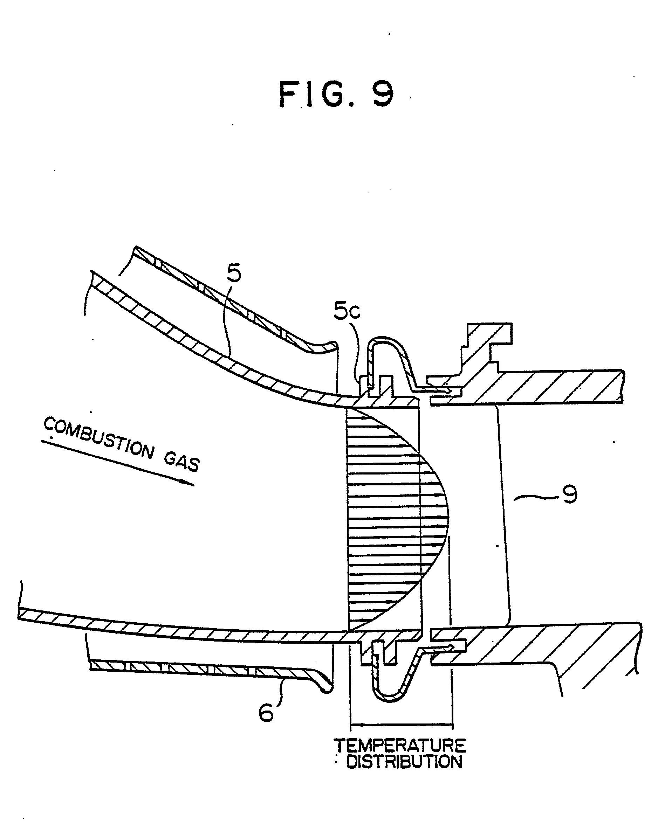

The temperature distribution or gradient of the combustion apparatus will now be described with reference to Fig. 9. The combustion gas from the combustor liner is mixed with and agitated by the diluting air. The combustion gas is introduced into the combustor tail pipe 5 under the condition of the temperature difference from outside to inside. As the combustion gas flows from the inlet circular shape of the combustor tail pipe 5 to the outlet sector shape thereof, there is the temperature distribution or gradient where the temperature in the central portion is high while the temperature in the peripheral portion is low with respect to the radial direction and the circumferential direction. With such a temperature gradient, the combustion gas is introduced into the turbine 9. This temperature gradient would cause the high spots of the vane metal temperature against the turbine, which would be a factor of deterioration of reliability.

According to the conventional technique, in the case where the impinge air for cooling the tail pipe is introduced into the tail pipe through holes formed in the tail pipe, the peripheral portion that is kept at a lower temperature will be further cooled. Thus, corresponding to this temperature decrease, the temperature of the central portion that is kept at a higher temperature is further remarkable. This is caused by a constant exhaust gas temperature control for the gas turbine.

According to the present invention, since the cooling fluid is not made to flow through the tail pipe, such undesired phenomenon may be avoided and the temperature gradient may be suppressed to a minimum possible level.

**Claim**

A gas turbine combustion apparatus comprising:
a cylindrical combustor liner (3) having an outer wall in which cooling air holes are formed;

a tail pipe (5) for introducing combustion gas, produced within said combustor liner (3), into a turbine portion;
a flow sleeve (6) surrounding said combustor liner and said tail pipe (5) substantially over their full length through a gap;
means (11; 12) for introducing cooling air into the gap between said flow sleeve (6),
said tail pipe (5), said cooling air introducing means having a group of small holes (11) formed in a first region of said flow sleeve close to said turbine portion and a fuel nozzle (7) provided at a head of said combustor liner;
characterized by means (5a) for introducing all the cooling air, that has been introduced between said flow sleeve (6) and said tail pipe (5), onto the outer wall of said combustor liner (3) through said gap and a retainer ring (5c) being provided at a turbine portion end of said tail pipe (5), and a circular cooling air introduction opening being formed between an outer periphery of said retainer ring (5c) and a turbine portion end of said flow sleeve (6).

**Patentanspruch**

Gasturbinenbrennkammer, umfassend:
eine zylindrische Brennkammerauskleidung (3) mit einer Außenwand , in der Kühlluftöffnungen ausgebildet sind;
ein Strahlrohr (5) zur Einleitung von innerhalb der Brennkammerauskleidung (3) erzeugtem Verbrennungsgas in einen Turbinenteil;
eine die Brennkammerauskleidung und das Strahlrohr (5) im wesentlichen über deren Gesamtlänge über einen Zwischenraum umgebende Strömungsmuffe (6);
Mittel (11; 12) zur Einleitung von Kühlluft in den Zwischenraum zwischen der Strömungsmuffe (6) und dem Strahlrohr (5), wobei die Kühllufteinleitungsmittel eine Gruppe kleiner Öffnungen (11), die in einem ersten Bereich der Strömungsmuffe nahe dem Turbinenteil gebildet sind, und eine am Kopf der Brennkammerauskleidung vorgesehene Treibstoffdüse (7) umfassen;
gekennzeichnet durch Mittel (5a) zum Leiten der gesamten Kühlluft, die zwischen Strömungsmuffe (6) und Strahlrohr (5) eingeleitet wurde, auf die Außenwand der Brennkammerauskleidung (3) durch den Zwischenraum und einen Haltering (5c), der an einem turbinenteilseitigen Ende des Strahlrohrs (5) vorgesehen ist, und eine kreisrunde Kühllufteinleitungsöffnung, die zwischen einem Außenumfang des Halterings (5c) und einem turbinenteilseitigen Ende der Strömungsmuffe (6) gebildet ist.

**Revendication**

Dispositif de combustion dans une turbine à gaz, comprenant:
une enceinte cylindrique (3) de la chambre de combustion, comportant une paroi extérieure dans laquelle sont ménagés des trous de passage de l'air de refroidissement;
un conduit arrière (5) pour l'introduction du gaz de combustion, produit à l'intérieur de ladite enceinte (3) de la chambre de combustion, dans une partie de la turbine;
un manchon d'écoulement (6) entourant ladite enceinte de la chambre de combustion et ledit conduit arrière (5), sensiblement sur toute leur longueur en en étant séparé par un intervalle;
des moyens (11; 12) servant à introduire de l'air de refroidissement dans l'intervalle existant entre ledit manchon d'écoulement (6) et ledit conduit arrière (5), lesdits moyens d'introduction de l'air de refroidissement comportant un groupe de petits trous (11) ménagés dans une première région dudit manchon d'écoulement à proximité de ladite partie de la turbine, et une tuyère (7) d'envoi du combustible, prévue au niveau d'une tête de ladite enceinte de la chambre de combustion;
caractérisée par des moyens (5a) pour introduire la totalité de l'air de refroidissement, qui a été introduit entre ledit manchon d'écoulement (6) et ledit conduit arrière (5), en l'amenant sur la paroi extérieure de ladite enceinte (3) de la chambre de combustion, à l'intérieur dudit intervalle, et un anneau de retenue (5c), disposé sur une extrémité, tournée du côté de la partie de la turbine, dudit conduit arrière (5), et une ouverture circulaire d'introduction de l'air de refroidissement ménagée entre un pourtour extérieur dudit anneau de retenue (5c) et une extrémité, située du côté de la partie de la turbine, dudit manchon d'écoulement (6).

FIG. 1

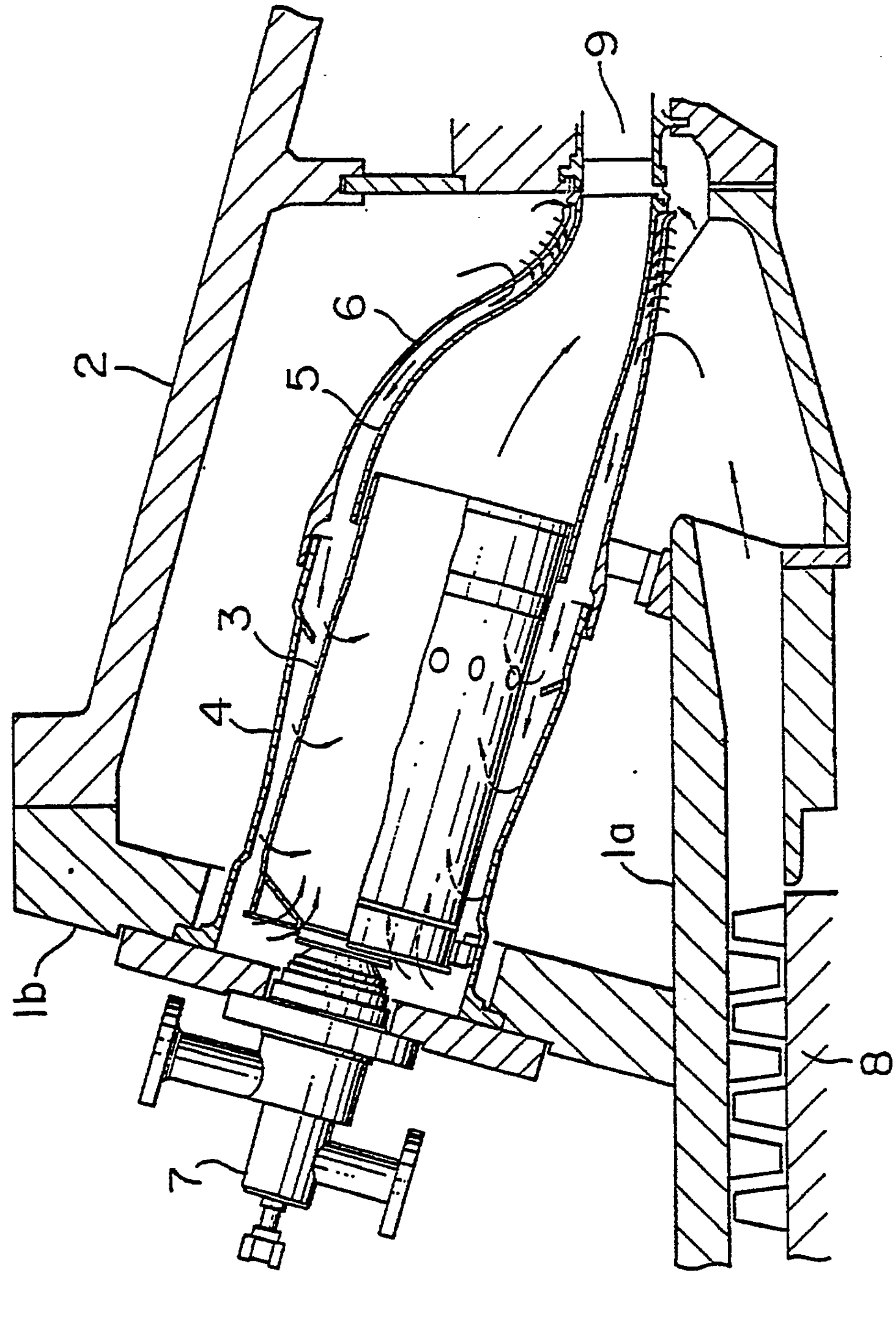

FIG. 2

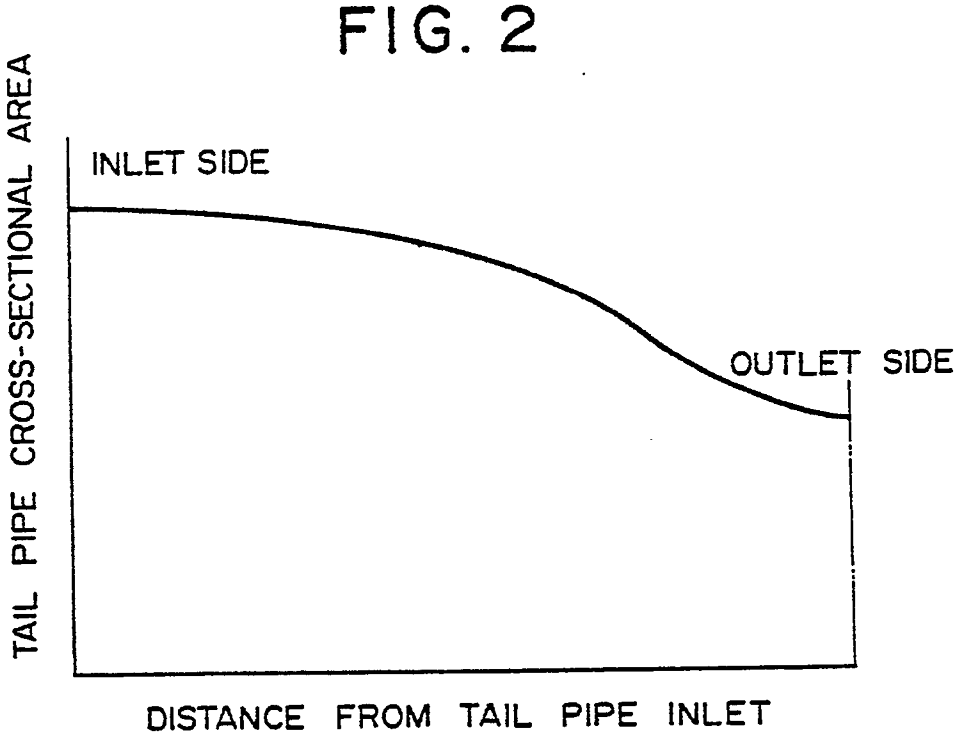
TAIL PIPE CROSS-SECTIONAL AREA
INLET SIDE
OUTLET SIDE
DISTANCE FROM TAIL PIPE INLET

FIG. 3

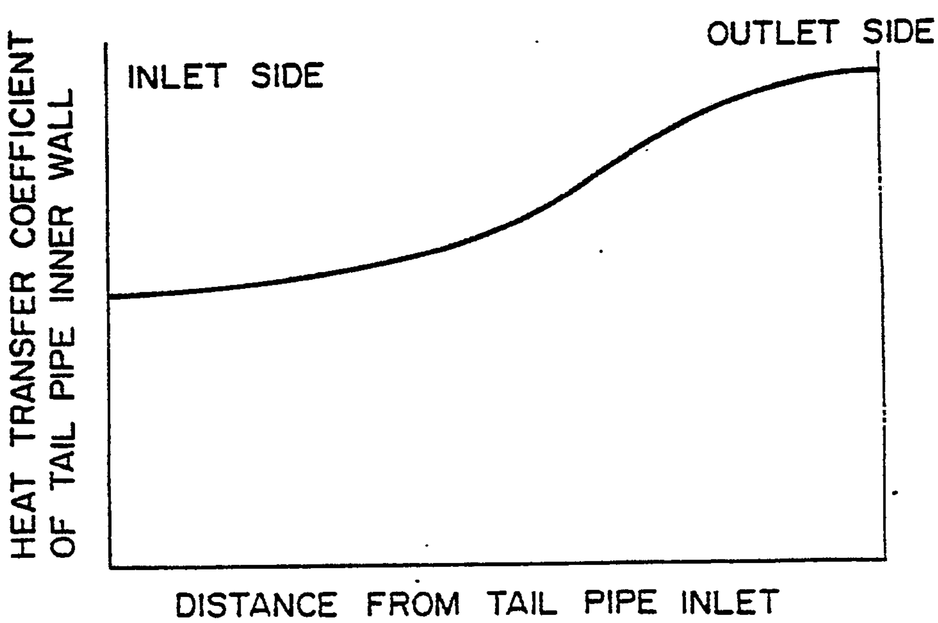
HEAT TRANSFER COEFFICIENT
OF TAIL PIPE INNER WALL
INLET SIDE
OUTLET SIDE
DISTANCE FROM TAIL PIPE INLET

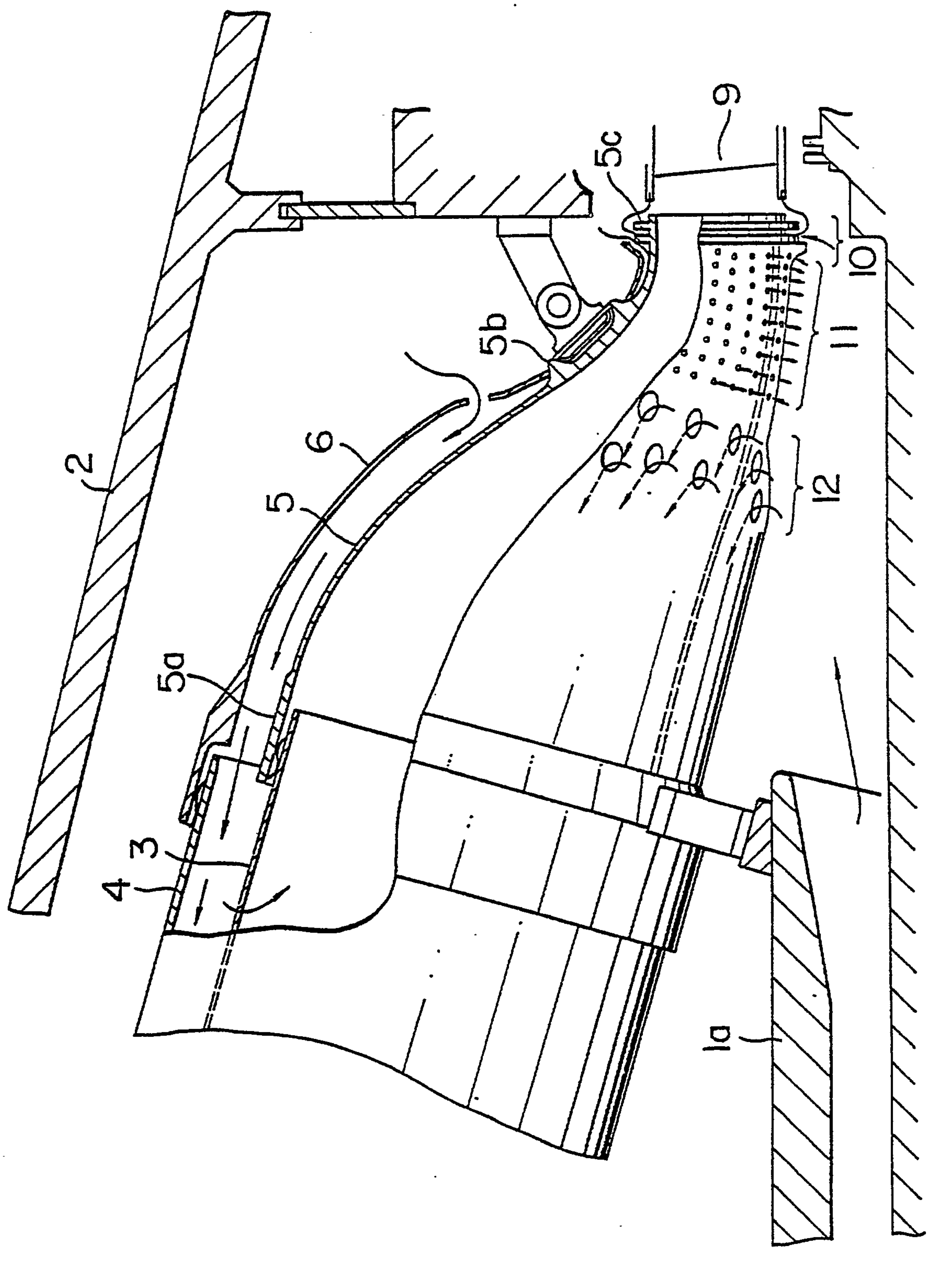


FIG. 4

FIG. 5A

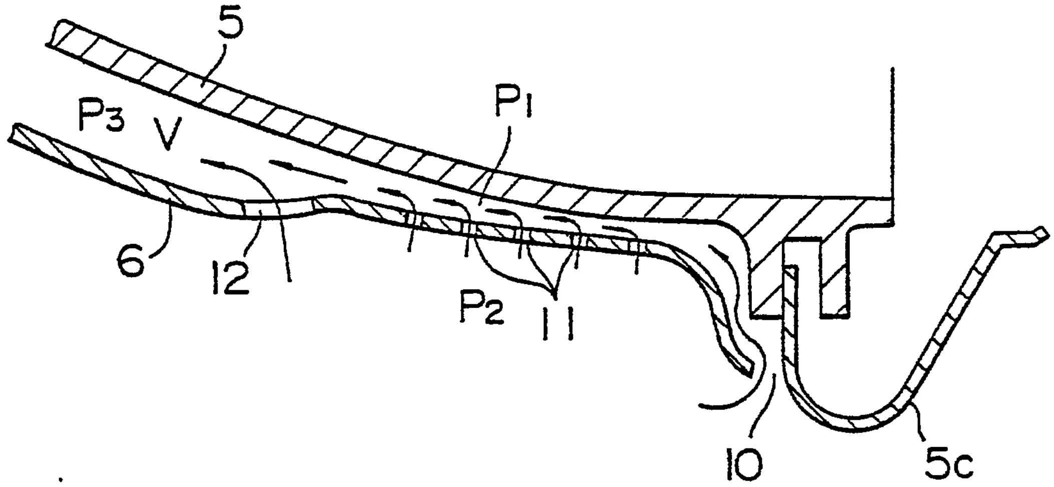


FIG. 5B

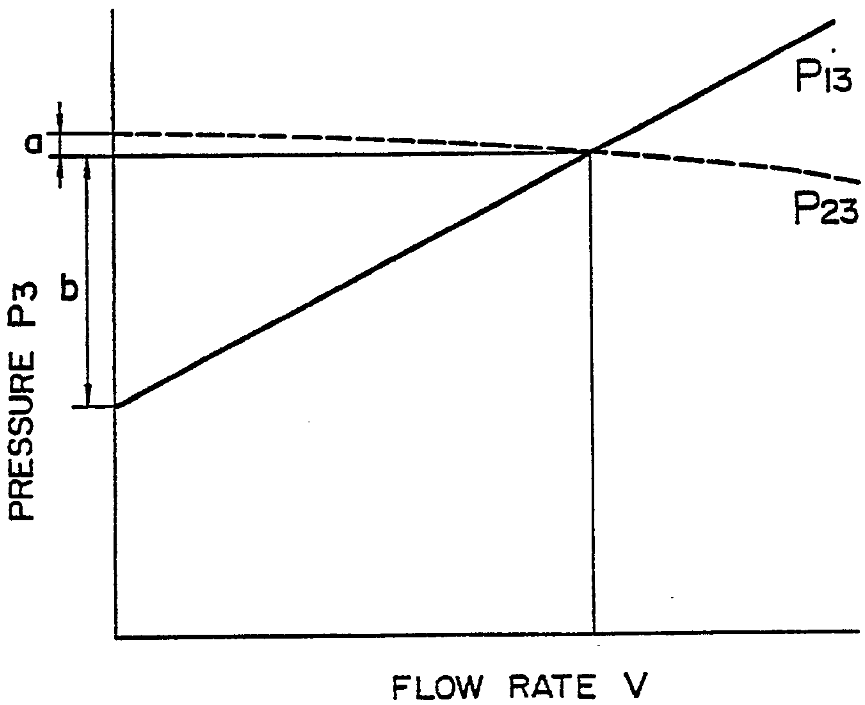

FIG. 6

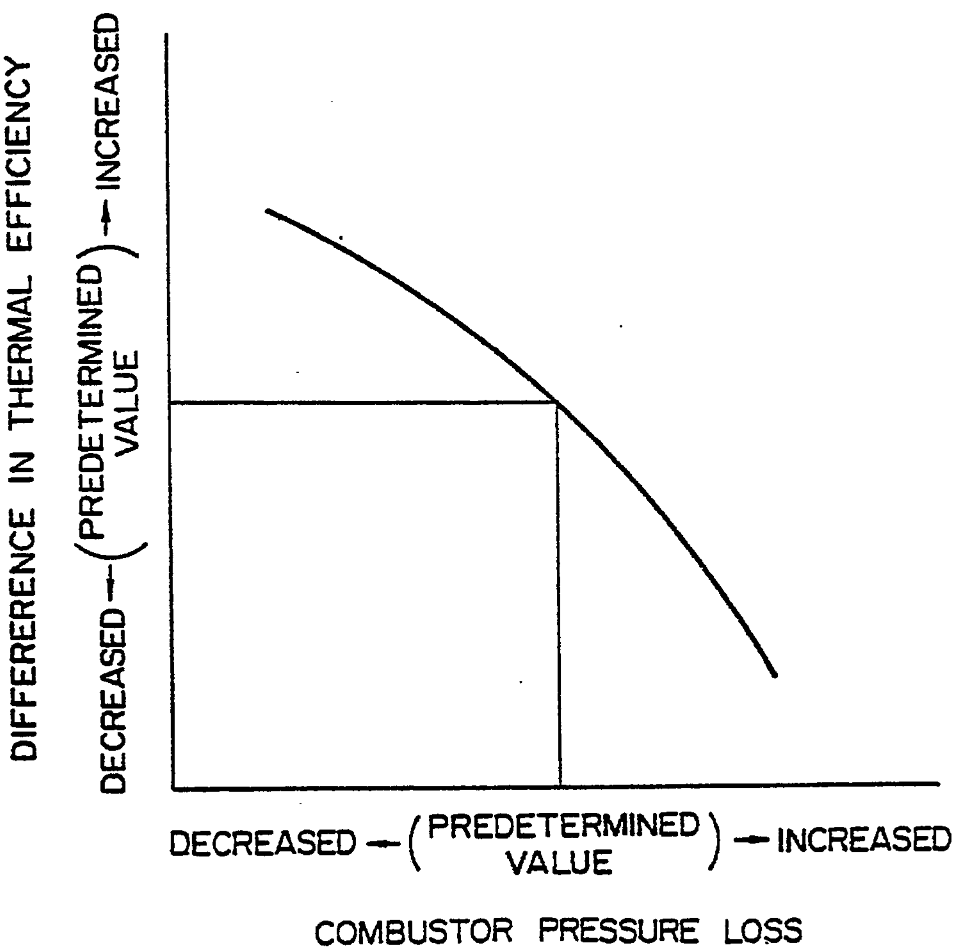
DIFFERERENCE IN THERMAL EFFICIENCY
DECREASED ← (PREDETERMINED VALUE) → INCREASED
DECREASED ← (PREDETERMINED VALUE) → INCREASED
COMBUSTOR PRESSURE LOSS

FIG. 7

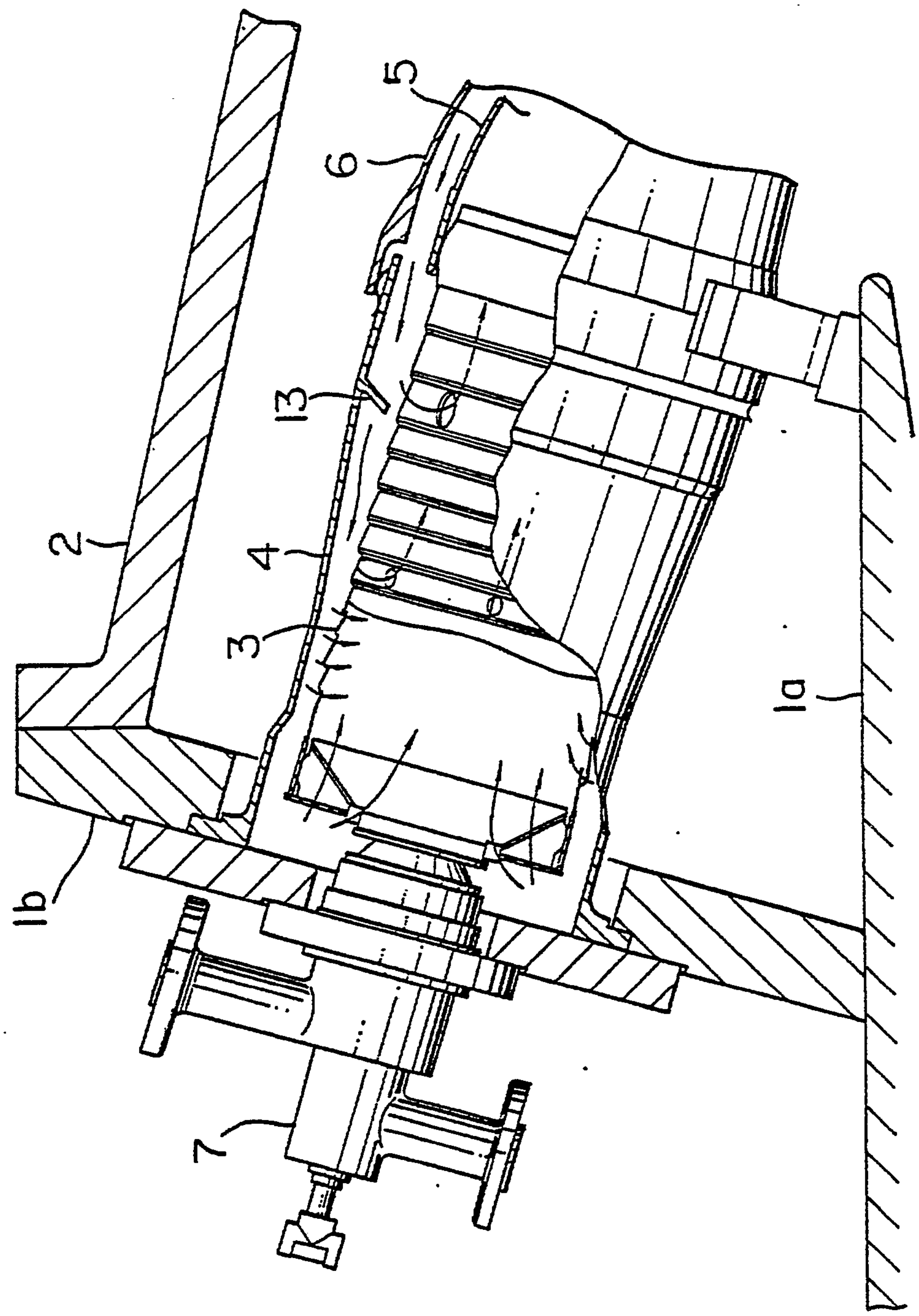

FIG. 8

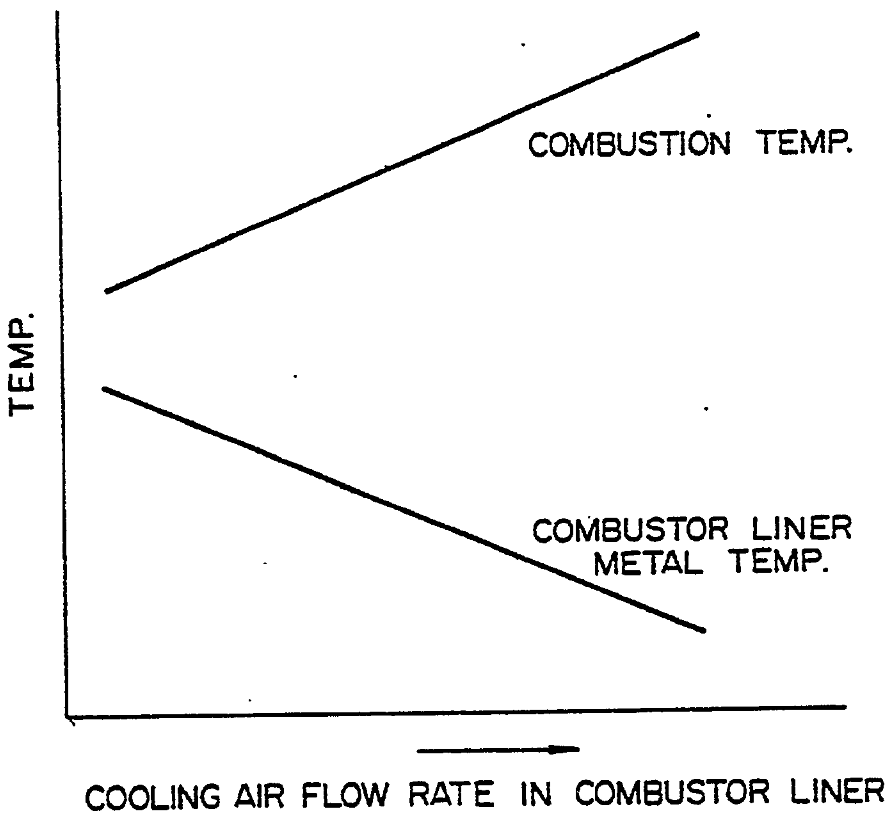
TEMP.
COMBUSTION TEMP.
COMBUSTOR LINER
METAL TEMP.
COOLING AIR FLOW RATE IN COMBUSTOR LINER

FIG. 9